# EUROPEAN PATENT APPLICATION

(11) **EP 4 455 961 A1**
(43) Date of publication of application: **30.10.2024**
(21) Application number: 24171835.2
(22) Date of filing: 23.04.2024
(51) Int. Cl.: G06Q 10/083

(54) **METHOD AND SYSTEM FOR SETTING COOLING PARAMETERS FROM A PEER TRANSPORT VEHICLE**

(30) Priority: 24.04.2023 US 202363497747 P
(71) Applicant: Carrier Corporation, Palm Beach Gardens, FL 33418 (US)
(72) Inventor: GOPAVARAM, Subhash Reddy, Hyderabad, 500081 (IN); PILLI, Srinivasa Reddy, Hyderabad, 500081 (IN); SAPPATI, Pradeep Kumar, Hyderabad, 500081 (IN); ELURI, Vinayak Rao, Hyderabad, 500081 (IN); RACHAMADUGU, Ranganath, Hyderabad, 500081 (IN); DUNNA, Venkata Satya Pratap Kumar, Hyderabad, 500081 (IN)
(74) Representative: Dehns

(57) **Abstract**

A method for setting cooling parameters for a refrigerated transport vehicle (101) includes receiving, from the refrigerated transport vehicle (101), first information including energy consumption and performance parameters associated with the refrigerated transport vehicle (101), and second information including vehicle type information and transit information associated with the refrigerated transport vehicle. The method further includes retrieving historical data associated with peer transport vehicles (103) similar to the refrigerated transport vehicle (101) based on the second information and identifying a peer transport vehicle (103) for which energy and fuel consumption is minimum based on the second information and the retrieved historical data. Upon determining that the energy consumption and the performance parameters of the refrigerated transport vehicle (101) are greater than the energy consumption and the performance parameters of the identified peer transport vehicle (103), the method further includes controlling setting of the cooling parameters of the refrigerated transport vehicle (101) based on the cooling parameters of the identified peer transport vehicle (103).

## Description

### CROSS REFERENCE TO RELATED APPLICATION

This application claims the benefit of U.S. Provisional Patent Application No. 63/497,747 filed on April 24, 2023, which is incorporated by reference herein in its entirety.

### FIELD OF THE INVENTION

The disclosure relates to the field of a cargo transport control system. In particular, the disclosure relates to a method and system for setting cooling parameters in a transport vehicle.

### BACKGROUND

Cargo transport vehicles have been a primary means of transporting goods for centuries and have evolved significantly over time to accommodate user needs. The transportation of perishable goods, such as food, fruits, flowers, pharmaceuticals, and other sensitive materials requires careful consideration of environmental factors that can impact the quality and safety of the goods being transported from one location to another location.

To address the quality and safety issues, traditional cargo transport vehicles have integrated systems to monitor and collect environmental parameters during refrigerated transportation. These integrated systems are critical to ensure that the integrity and quality of the goods being transported are maintained throughout the journey.

Even with such conventional integrated systems, some cargo transport vehicles consume more energy than other cargo transport vehicles that are carrying the same kind of goods. This is because the one or more set parameters in the cargo transport vehicles may not be optimized for specific goods or transport vehicle conditions, which may lead to more energy consumption during the running and parking conditions of these cargo transport vehicles. The increase in energy consumption further leads to an increase in the cost of transportation and has an adverse effect on the environment due to the increased carbon footprint.

Therefore, there lies a need for an improved cargo transport vehicle system that can address the above-discussed inefficiencies and provide a more energy-efficient and environmentally friendly solution for transporting goods.

### SUMMARY

This summary is provided to introduce a selection of concepts, in a simplified format, that are further described in the detailed description. This summary is neither intended to identify key or essential inventive concepts of the invention and nor is it intended for determining the scope of the invention.

According to a first aspect, the present invention provides a method for setting cooling parameters for a transport vehicle by a server. The method includes receiving first information and second information from the transport vehicle. The first information includes energy consumption and performance parameters associated with the transport vehicle and the second information includes vehicle type information and transit information associated with the transport vehicle. The method further includes retrieving historical data associated with a plurality of peer transport vehicles similar to the transport vehicle based on the second information. Thereafter, the method includes identifying a peer transport vehicle, of the plurality of peer transport vehicles, for which energy and fuel consumption is minimum based on the received second information and the retrieved historical data. Upon identifying the peer transport vehicle for which the energy and fuel consumption is minimum, the method further includes determining whether the energy consumption and the performance parameters of the transport vehicle are greater than the energy consumption and the performance parameters of the identified peer transport vehicle. Upon determining that the energy consumption and the performance parameters of the transport vehicle are greater than the energy consumption and the performance parameters of the identified peer transport vehicle, the method further includes controlling setting of the cooling parameters of the transport vehicle based on the cooling parameters of the identified peer transport vehicle.

Optionally, the first information and second information are received via one of a Bluetooth^{®}, Wireless Fidelity (Wi-Fi^{®}), Long Range Radio (LoRa^{®}), or Zigbee^{®}.

Optionally, the energy and performance parameters include at least one of British Thermal Unit (BTU) consumption of the transport vehicle, fuel consumption of the transport vehicle, or speed of the transport vehicle.

Optionally, the transit information includes at least one of vehicle route information, a type of cargo carried by the transport vehicle, or real time environmental conditions around the transport vehicle.

Optionally, the cooling parameters of the transport vehicle include at least one of temperature inside the transport vehicle, humidity inside the transport vehicle, fresh air ventilation inside the transport vehicle, parameters associated with a drain outlet motor of the transport vehicle, defrost rate, and dehumidification.

Optionally, the setting of the cooling parameters of the transport vehicle includes one of copying the cooling parameters of the identified peer transport vehicle to the transport vehicle or overriding the cooling parameters of the transport vehicle based on the cooling parameters of the identified peer transport vehicle.

Optionally, the method may further include notifying, upon determining that the energy consumption and the performance parameters of the transport vehicle are greater than the energy consumption and the performance parameters of the identified peer transport vehicle, a user of the transport vehicle by displaying an alert message on a dashboard panel of the transport vehicle. The alert message may indicate an availability of better configuration settings for the cooling parameters of the transport vehicle. The method may further include controlling the setting of the cooling parameters of the transport vehicle based on a user response to the notified alert message.

Optionally, the method may further include notifying an alert message to a third party remotely managing the transport vehicle. The alert message indicates an availability of better configuration settings for the cooling parameters of the transport vehicle. The method may further include controlling the setting of the cooling parameters of the transport vehicle based on a response from the third party to the notified alert message.

Optionally, the historical data associated with the plurality of peer transport vehicles is retrieved using one of an Artificial Intelligence (Al) model or a Machine Leaming (ML) model.

Optionally, the method may further include calculating a trip cost associated with a current trip of the transport vehicle based at least on the BTU consumption and energy consumption of the transport vehicle. Thereafter, the method may include determining, based on the calculated trip cost, efficient parameters for setting the cooling parameters of the transport vehicle.

Optionally, the method may further include comparing the calculated trip cost with a trip cost of the identified peer transport vehicle and determining whether the calculated trip cost of the transport vehicle is greater than the trip cost of the identified peer transport vehicle. The method may further include copying the cooling parameters of the identified peer transport vehicle to the transport vehicle upon determining that the calculated trip cost of the transport vehicle is greater than the trip cost of the identified peer transport vehicle.

Optionally, upon determining that the energy consumption and the performance parameters of the transport vehicle are less than the energy and fuel consumption of the identified peer transport vehicle, the method may further include skipping one of the copying of the cooling parameters of the identified transport vehicle to the transport vehicle or the overriding of the cooling parameters of the transport vehicle. The method may further include storing the cooling parameters of the transport vehicle into a server database.

Optionally, the method may further include comparing the speed of the transport vehicle with a speed of the identified peer transport vehicle. Thereafter, the method may include notifying, based on the comparison, the user of the transport vehicle by displaying an alert message on the dashboard of the transport vehicle. The displayed alert message includes a message for the user to maintain the speed of the transport vehicle with respect to the speed of the identified peer transport vehicle.

Optionally, the method may further include controlling, based on the comparison, at least one of air intake operation, fresh air blower motor operation, or a blower speed of the transport vehicle.

Optionall, the method may further include determining whether the energy consumption and the performance parameters of the transport vehicle are greater than a threshold level after the copying of the cooling parameters of the identified peer transport vehicle to the transport vehicle or the overriding of the cooling parameters of the transport vehicle. Upon determining that the energy consumption and the performance parameters of the transport vehicle are greater than the threshold level, the method may include sending a notification alert to an external device associated with a maintenance team responsible for maintaining the transport vehicle. The notification alert sent to the external device indicates a requirement for maintenance of the transport vehicle or a requirement for replacement of one or more filters.

According to a second aspect, the present invention provides a system for setting cooling parameters for a transport vehicle. The system includes a server that includes a memory and a processor. The processor is communicatively coupled to the memory. The processor is configured to receive first information and second information from the transport vehicle. The first information includes energy consumption and performance parameters associated with the transport vehicle and the second information includes vehicle type information and transit information associated with the transport vehicle. The processor is further configured to retrieve historical data associated with a plurality of peer transport vehicles similar to the transport vehicle based on the second information. The processor is further configured to identify a peer transport vehicle, of the plurality of peer transport vehicles, for which energy and fuel consumption is minimum based on the received second information and the retrieved historical data. Upon determining the peer transport vehicle for which energy and fuel consumption is minimum, the processor is further configured to determine whether the energy consumption and the performance parameters of the transport vehicle are greater than the energy consumption and the performance parameters of the identified peer transport vehicle. Upon determining that the energy consumption and the performance parameters of the transport vehicle are greater than the energy consumption and the performance parameters of the identified peer transport vehicle, the processor is further configured to control setting of the cooling parameters of the transport vehicle based on cooling parameters of the identified peer transport vehicle.

According to a third aspect, the present invention provides a non-transitory computer readable medium including instructions stored thereon that when processed by at least one processor cause a system to receive first information and second information from the transport vehicle. The first information includes energy consumption and performance parameters associated with the transport vehicle and the second information includes vehicle type information and transit information associated with the transport vehicle. The instructions when processed by the at least one processor further cause the system to retrieve historical data associated with a plurality of peer transport vehicles similar to the transport vehicle based on the second information and identify a peer transport vehicle, of the plurality of peer transport vehicles, for which energy and fuel consumption is minimum based on the received second information and the retrieved historical data. The instructions when processed by the at least one processor further cause the system to determine whether the energy consumption and the performance parameters of the transport vehicle are greater than the energy consumption and the performance parameters of the identified peer transport vehicle. Upon the determination that the energy consumption and the performance parameters of the transport vehicle are greater than the energy consumption and the performance parameters of the identified peer transport vehicle, the instructions when processed by the at least one processor further cause the system to control setting of the cooling parameters of the transport vehicle based on cooling parameters of the identified peer transport vehicle.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only exemplary embodiments of the invention and are therefore not to be considered limiting of the scope of the invention, which is defined only by the claims. The invention will be described and explained with additional specificity and detail with the accompanying drawings, which are provided by way of example only.

### BRIEF DESCRIPTION OF THE DRAWINGS

These and other features, aspects, and advantages of the disclosure will become better understood when the following detailed description is read with reference to the accompanying drawings in which like characters represent like parts throughout the drawings, wherein:
**FIG. 1** illustrates an example system environment for setting cooling parameters for a transport vehicle;
**FIG. 2** illustrates another example system environment including a schematic block diagram of the server of FIG. 1 and a fleet management module;
**FIG. 3** illustrates an example block diagram of an Electronic Control Unit (ECU) of the transport vehicle of FIG. 1; and
**FIG. 4** illustrates a flowchart of a method performed by processor of FIG. 2 for setting cooling parameters for the transport vehicle.

Further, skilled artisans will appreciate that elements in the drawings are illustrated for simplicity and may not have necessarily been drawn to scale. For example, the flow charts illustrate the method in terms of the most prominent steps involved to help to improve understanding. Furthermore, in terms of the construction of the device, one or more components of the device may have been represented in the drawings by conventional symbols, and the drawings may show only those specific details that are pertinent to understanding the embodiments so as not to obscure the drawings with details that will be readily apparent to those of ordinary skill in the art having the benefit of the description herein.

### DETAILED DESCRIPTION

It should be understood at the outset that although illustrative implementations of embodiments are illustrated below, the system and method may be implemented using any number of techniques. The invention should in no way be limited to the illustrative implementations, drawings, and techniques illustrated below, including the exemplary design and implementation illustrated and described herein.

The term "some" and "one or more" as used herein is defined as "one, or more than one, or all." Accordingly, the terms "one," "more than one," but not all" or "all" would all fall under the definition of "one or more". The term "some embodiments" or "one or more embodiments" may refer to one embodiment or several embodiments or all embodiments. Accordingly, the term "some embodiments" is defined as meaning "one embodiment, or more than one embodiment, or all embodiments".

The terminology and structure employed herein are for describing, teaching, and illuminating some embodiments and their specific features and elements and do not limit, restrict, or reduce the spirit and scope of the claims or their equivalents.

More specifically, any terms used herein such as but not limited to "includes", "comprises", "has", "have", and other grammatical variants thereof do not specify an exact limitation or restriction and certainly do not exclude the possible addition of one or more features or elements, unless otherwise stated, and must not be taken to exclude the possible removal of one or more of the listed features and elements, unless otherwise stated with the limiting language "must comprise" or "needs to include".

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Unless otherwise defined, all terms, and especially any technical and/or scientific terms, used herein may be taken to have the same meaning as commonly understood by one having ordinary skill in the art.

Embodiments will be described below in detail with reference to the accompanying drawings.

Embodiments disclosed herein provide a method and system for setting cooling parameters in a transport vehicle from a peer transport vehicle among a plurality of transport peer transport vehicles for which the energy and fuel consumption is minimum in comparison to other peer transport vehicles among the plurality of transport peer transport vehicles. The method and system disclosed herein help in providing a more energy-efficient and environmentally friendly solution for the refrigerated transportation of goods.

In general, embodiments disclosed herein may include a system, method, and/or computer program product that controls the setting of the cooling parameters of the transport vehicle based on the cooling parameters of the peer transport vehicle. The peer transport vehicle is a vehicle among the plurality of transport peer transport vehicles for which the energy and fuel consumption is minimum in comparison to other peer transport vehicles among the plurality of transport peer transport vehicles. Further, the peer transport vehicle would be a vehicle currently traveling, or a vehicle which previously traveled on a similar route or a similar terrain as that of the transport vehicle and carrying the same kind of goods under similar environmental conditions as that of the transport vehicle. Further, a vehicle type of the peer transport vehicle may also be same as a vehicle type of the transport vehicle. Accordingly, the cooling parameters of the transport vehicle may be set such that the energy consumption of the transport vehicle during the running and parking conditions is optimized to match the energy consumption of the peer transport vehicle.

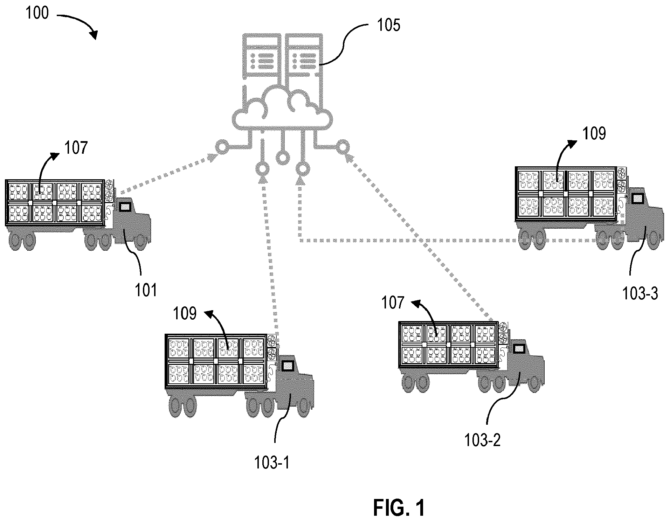

**FIG. 1** illustrates an example system environment 100 for setting cooling parameters for the transport vehicle. In a non-limiting example, the system environment 100 may include a refrigerated transport vehicle (hereinafter "transport vehicle" for simplicity) 101, a plurality of peer refrigerated transport vehicles (hereinafter "transport vehicles" for simplicity) 103-1 to 103-3, and a server 105. The transport vehicle 101 and each of the plurality of peer transport vehicles 103-1 to 103-3 corresponds to a refrigerated transport vehicle for the refrigerated transportation of goods. The refrigerated transport vehicle may correspond to, but not limited to, refrigerated trucks, refrigerated vans, refrigerated trailers, trucks carrying refrigerated containers, and the like. It shall be recognized and understood by one having ordinary skill in the relevant art that the number of peer transport vehicles depicted in FIG. 1 is exemplary only, and the system environment 100 may comprise any number of peer transport vehicles.

In one or more embodiments, it is to be noted that the transport vehicle 101 and the plurality of peer transport vehicles 103-1 to 103-3 correspond to a same type of vehicle and carrying the same kind of goods under the similar environmental conditions. As a non-limiting example, the transport vehicle 101 and the peer transport vehicle 103-2 may have a same type of fuel inlet, for example, but not limited to petrol inlet, gas inlet, diesel inlet, a compressed natural gas (CNG) inlet, and so forth. Further, the transport vehicle 101 and the peer transport vehicle 103-2 may be an electric vehicle or a hybrid vehicle. Further, as a non-limiting example, the transport vehicle 101 and the peer transport vehicle 103-2 may be carrying the same type of homogenous goods, such as apples 107. Also, as a non-limiting example, the peer transport vehicles 103-1 and 103-3 may be carrying the same type of homogenous goods, such as oranges 109.

The server 105 may correspond to a cloud server and provide a centralized and scalable platform for collecting data from the transport vehicle 101 and each of the plurality of peer transport vehicles 103-1 to 103-3. The server 105 may also provide a centralized and scalable platform for managing and controlling operation of the transport vehicle. The server 105 may also control setting of cooling parameters of the transport vehicle. The management and control operations may help in optimizing the operational parameters of the transport vehicle, reduce transportation costs, and improve the overall efficiency of the transport vehicle. The server 105 may also store historical data associated with each of the plurality of peer transport vehicles 103-1 to 103-3. The server 105 may correspond to, but not limited to, a public server, a private server, a hybrid server, a public cloud server, a private cloud server, a hybrid cloud server, and any other cloud server that may store and process data related to temperature monitoring, GPS tracking, and other sensor data from refrigerated transport vehicles in order to perform advanced analytics.

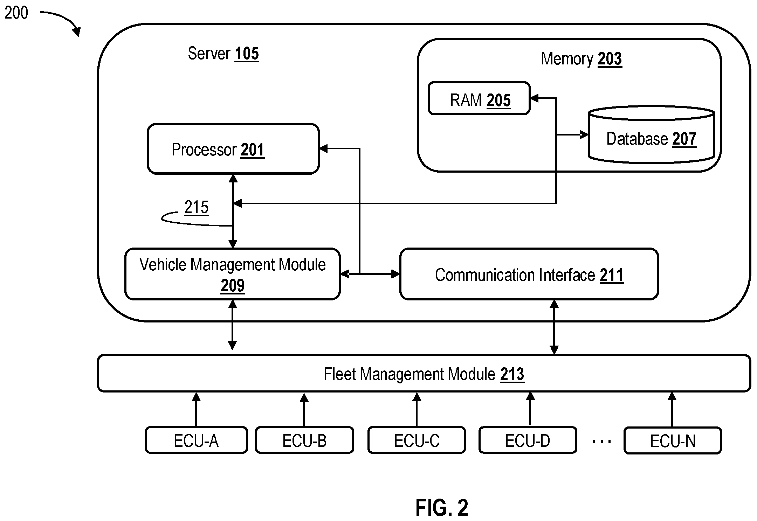

**FIG. 2** illustrates an example system environment 200 including a schematic block diagram of the server 105 of FIG. 1 and a fleet management module 213. The system environment 200 further includes a plurality of Electronic Control Units (ECUs), i.e., ECU-A, ECU-B, ECU-C, ECU-D, ... , ECU-N associated with the transport vehicle 101 and the plurality of peer transport vehicles 103-1 to 103-3. In a non-limiting example, ECU-A corresponds to an ECU of the transport vehicle 101, ECU-B corresponds to an ECU of a first peer transport vehicle 103-1 of the plurality of peer transport vehicles 103-1 to 103-3, ECU-C corresponds to an ECU of a second peer transport vehicle 103-2 of the plurality of peer transport vehicles 103-1 to 103-3, and ECU-D corresponds to an ECU of a third peer transport vehicle 103-2 of the plurality of peer transport vehicles103-1 to 103-3.

The fleet management module 213 corresponds to a hardware system, a software system, or a combination of the hardware and the software designed for managing and optimizing the operations of a fleet of the transport vehicle 101 and the plurality of the peer transport vehicles 103-1 to 103-3. The fleet management module 213 may be a standalone system connected with the server 105 via a wireless network to be described later. The fleet management module 213 may perform one or more operations for enabling one or more fleet managers to monitor, control, and analyse various aspects of vehicle operations. The fleet management module 213 may be configured to track the real-time location of the transport vehicle 101 using GPS or other tracking technologies. The fleet management module 213 may be further configured to collect a wide range of data from one or more sensors of the ECU-A of the transport vehicle 101 and other system components, for example, user dashboard, input devices, etc. installed in the transport vehicle 101. As a non-limiting example, the collected data may include information associated with fuel consumption, engine performance, driver behaviour, battery State of Charge (SoC), cargo load, and other vehicle parameters.

Further, as shown in FIG. 2, the components of the server 105 may include, but not limited to, one or more processing units (herein 'processor') 201, a memory 203, and communication channel 215 which may take the form of a bus, wired or wireless network, or other forms, that couples various system components including the processor 201 and the memory 203. The server 105 also typically includes a variety of computer system-readable media. Such media may be any available media that is accessible by the server 105, and it includes both volatile and non-volatile media, removable and non-removable media. The server 105 further includes a vehicle management module 209 and a communication interface 211.

The processor 201 may receive computer-readable program instructions from the memory 203 and execute the received instructions, thereby performing one or more processes or method steps, as discussed herein, and as defined by the server 105. The processor 201 may include any processing hardware, software, or combination of hardware and software utilized by the server 105 that carries out the computer-readable program instructions by performing arithmetical, logical, and/or input/output operations. Examples of the processor 201 may include, but not limited to, an arithmetic logic unit, which performs arithmetic and logical operations, a control unit, which extracts, decodes, and executes instructions from a memory, and an array unit, which utilizes multiple parallel computing elements.

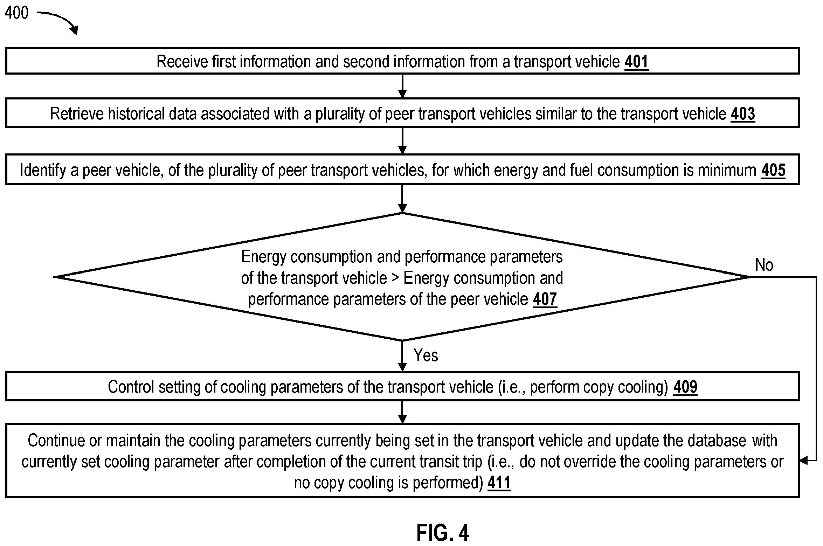

The processor 201 may be configured to set or modify the cooling parameters for the transport vehicle 101. The setting or modification of the cooling parameters may correspond to, but not limited to, copying the cooling parameters of a peer transport vehicle among the plurality of peer transport vehicles 103-1 to 103-3 to the transport vehicle 101 or overriding the cooling parameters of the transport vehicle 101 based on the cooling parameters of the peer transport vehicle. The cooling parameters of the transport vehicle 101 may include at least one of temperature inside the transport vehicle 101, humidity inside the transport vehicle 101, fresh air ventilation inside the transport vehicle 101, parameters associated with a drain outlet motor of the transport vehicle 101, defrost rate, and dehumidification. A description of the operations performed by the processor 201 for setting or modifying the cooling parameters for the transport vehicle 101 will be described below with reference to the method flow chart of FIG. 4 of the drawings.

The memory 203 may include a tangible device that retains and stores computer-readable program instructions, as provided by the server 105, for use by the processor 201. The memory 203 may include computer system readable media in the form of volatile memory, such as Random-Access Memory (RAM) 205.

Further, the memory 203 may include a database 207 for storing the cooling parameters of the transport vehicle 101 and the cooling parameters of the plurality of peer transport vehicles 103-1 to 103-3. The database 207 may also store energy consumption and performance parameters, vehicle type information, and transit information associated with the transport vehicle 101 and the plurality of peer transport vehicles1 03-1 to 103-3. The database 207 may also store historical data associated with the plurality of peer transport vehicles103-1 to 103-3. The historical data may include, but not limited to, past transit information including one or more cooling parameters and other vehicle parameters that are set during a past transit trip of the plurality of peer transport vehicles103-1 to 103-3. The transit trip information may further include energy consumption information and performance related information during the past transit trip. In an embodiment, the past transit trip may be similar as a current transit trip of the transport vehicle 101. The database 207 may correspond to a data storage and management system hosted on the server 105 and is accessible over the internet by the ECUs ECU-A through ECU-N.

In a non-limiting example, the memory 203 may be provided for reading from and writing to a non-removable, non-volatile magnetic media (not shown and typically called a "hard drive", either mechanical or solid-state). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media may be provided. In such instances, each of the memory elements described herein may be connected to the bus 215 by one or more data media interfaces (not shown). As will be further depicted and described below, the memory 203 may include at least one computer program product having a set (e.g., at least one) of program modules that are configured to carry out the operations of embodiments herein.

The bus 215 represents one or more of any of several types of bus structures, including a memory bus or memory controller, a peripheral bus, an accelerated graphics port, and a processor or local bus using any of a variety of bus architectures.

The vehicle management module 209 may be configured to manage notifications of one or more alerts for a user of the transport vehicle 101. The vehicle management module 209 may also be configured to manage notifications of the one or more alerts for an external device associated with a maintenance team responsible for maintaining the transport vehicle 101. The vehicle management module 209 may also be configured to manage notifications of the one or more alerts for a third party remotely managing the transport vehicle 101. The one or more alerts may correspond to an alert notification message, voice message, a control signal, or any command generated by the processor 201 to inform at least one of the user of the transport vehicle 101, the external device, or the third party remotely managing the transport vehicle 101. The third party may be, but not be limited to, a fleet manager managing the transport vehicle 101.

The communication interface 211 may be created in software or maybe a physical connection in hardware. The communication interface 211 may be configured with, but not limited to, Bluetooth^{®}, Wi-Fi^{®}, LoRa^{®}, Zigbee^{®}, and the like. The communication interface 211 may be further configured to connect with a network, external media, a display, or any other components in the system environment 200, or combinations thereof. The connection with the network may be a physical connection, such as a wired Ethernet connection, or may be established wirelessly. The network may include wired networks, wireless networks, Ethernet Audio Video Bridging (AVB) networks, or combinations thereof. The wireless network may be a cellular telephone network, 802.11, 802.16, 802.20, 802.1Q, or Worldwide Interoperability for Microwave Access (WiMax)^{®} network. Further, the network may be a public network, such as the internet, a private network, such as an intranet, or combinations thereof, and may utilize a variety of networking protocols now available or later developed networking protocols.

The units, amongst other things, include routines, programs, objects, components, data structures, etc., which perform particular tasks or implement data types. The units may also be implemented as, signal processor(s), state machine(s), logic circuitries, and/or any other device or component that manipulates signals based on operational instructions.

Further, each of the plurality of electronic control units ECU-A to ECU-N may include a controlling unit (i.e., a Central Processing Unit (CPU)), one or more sensors, a system memory, a system bus, and a communication interface.

The above-described system environment 200 is an example implementation for setting or modifying the cooling parameters for the transport vehicle 101 and is not intended to suggest any limitation as to the scope of use or operability of one or more embodiments described herein (indeed additional or alternative components and/or implementations may be used). That is, the system environment 200 and elements therein may take many different forms and include multiple and/or alternate components and facilities. Further, the system environment 200 may include and/or employ any number and combination of computing devices and networks utilizing various communication technologies, as described herein. Regardless, the system environment 200 is capable of being implemented and/or performing any of the operability set forth hereinabove.

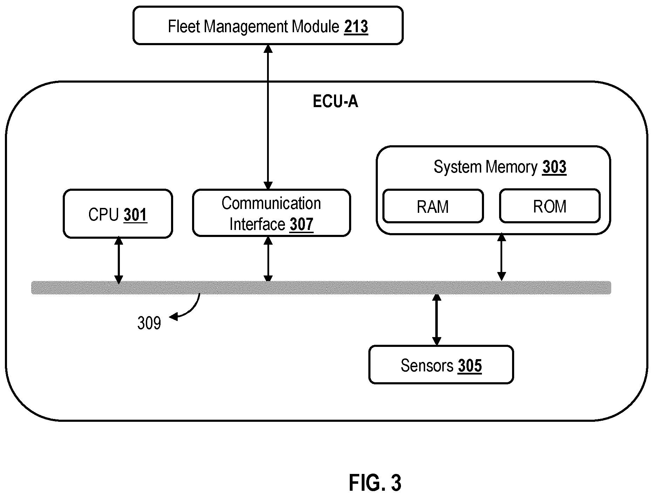

As a non-limiting example, **FIG. 3** illustrates an example block diagram of the ECU-A of the transport vehicle 101. As shown in FIG. 3, the ECU-A includes a CPU 301, a system memory 303, one or more sensors 305, a communication interface 307, and a system bus 309.

The CPU 301 may be configured for controlling various system components of the transport vehicle 101. The CPU 301 may essentially be a completely self-contained computing system, containing multiple cores or processors, a bus, a memory controller, a cache, etc. (such as a system-on-chip). A multi-core processor may be symmetric or asymmetric.

The system memory 303 may include a tangible device that retains and stores computer-readable program instructions for use by the CPU 301. The system memory 303 may include computer system readable media in the form of volatile memory, such as Random-Access Memory (RAM). Further, the system memory 303 may also include a non-tangible device including a Read-Only Memory (ROM).

The one or more sensors 305 may be configured to periodically measure energy consumption and vehicle performance parameters of the transport vehicle 101 or the corresponding peer transport vehicles. The energy and performance parameters include at least one of the BTU consumption of the transport vehicle 101, fuel consumption of the transport vehicle 101, or speed of the transport vehicle 101. The one or more sensors may include, but not limited to, a fuel level sensor, odometer sensor, engine Revolutions Per Minute (RPM) sensor, throttle position sensor, mass air flow sensor, exhaust gas oxygen sensor, battery SoC sensor, current sensor, voltage sensor, regenerative braking sensor, temperature sensors, acceleration sensors, motion sensors, gyro sensors, air index measurement sensor, intake air temperature sensors, engine coolant temperature sensors, and the like.

The CPU 301 may be configured to periodically share the energy consumption and vehicle performance parameters measured by the one or more sensors to the server 105 via the fleet management module 213. The sharing of the energy consumption and vehicle performance parameters measured by the one or more sensors to the server 105 on periodic intervals helps in performing better comparison and analysis for copying or modifying the cooling parameters with respect to best and efficient peer transport vehicle in terms of less BTU and energy consumption.

The communication interface 307 may be connected to a network, such as the wireless network as described above. A detailed description of the wireless network and type of the wireless network is described herein in the above paragraphs. Therefore, a detailed description of the same is omitted herein for the sake of brevity. The communication interface 307 may include a transceiver having a transmitter and a receiver for receiving or transmitting data from or to the server 105.

The system bus 309 may be any of several types of bus structures including a memory bus or memory controller, a peripheral bus, and a local bus using any of a variety of bus architectures. The system memory 303 may corresponds to one of a hard disk drive, a magnetic disk drive, an optical disk drive, a tape drive, a solid-state drive, or the like. The system memory 303 may include software modules that can be controlled and executed by the CPU 301. Other hardware or software modules may also be contemplated. The system memory 303 may be connected to the ECU-A by a drive interface. The drives and the associated computer-readable storage media provide non-volatile storage of computer-readable instructions, data structures, program modules, and other data for the ECU-A.

**FIG. 4** illustrates a flowchart of a method 400 for setting or modifying the cooling parameters for the transport vehicle 101. The method 400 is executed by the processor 201 of the server 105 of the system environment 200.

At step 401 of the method 400, the processor 201 receives first information and second information from the ECU-A of the transport vehicle 101 via the communication interface 211. In a non-limiting example, the first information includes energy consumption and performance parameters associated with the transport vehicle 101 and the second information includes vehicle type information and transit information associated with the transport vehicle 101. The first information and the second information may be received by the processor 201 via one of the Bluetooth^{®}, the Wi-Fi^{®}, the LoRa^{®}, or the Zigbee^{®} of the communication interface 211. Here, the energy and performance parameters may include at least one of the BTU consumptions of the transport vehicle 101, fuel consumptions of the transport vehicle 101, or speed of the transport vehicle 101. As a non-limiting example, the BTU consumption of the transport vehicle 101 may be 24000 BTU/HR.

Further, the transit information may include at least one of the vehicle route information of the transport vehicle 101, a type of cargo/goods carried by the transport vehicle 101, or real time environmental conditions around the transport vehicle 101. The vehicle type information may include a vehicle type for example, refrigerated truck, heavy motor vehicle, light motor vehicle, etc. Further, the vehicle route information of the transport vehicle 101 may include information associated with a travel route of the current transit of the transport vehicle 101 and information associated with a terrain of the travel route of the current transit of the transport vehicle 101. The terrain may correspond to one of but not limited to urban terrain, mountainous terrain, hilly terrain, agricultural terrain, coastal terrain, forest terrain, tundra terrain, desert terrain, and the like.

At step 403, the processor 201 retrieves historical data associated with the plurality of peer transport vehicles 103-1 to 103-3 based on the second information. As an example, the processor 201 retrieves the historical data from the database 207. In particular, the processor 201 retrieves the historical data associated with the plurality of peer transport vehicles 103-1 to 103-3 using one of an artificial intelligence (Al) model or a machine learning (ML) model.

At step 405, after retrieving the historical data associated with the plurality of peer transport vehicles 103-1 to 103-3, the processor 201 may further identify the peer transport vehicle 103-2, among the plurality of peer transport vehicles 103-1 to 103-3, for which the energy and fuel consumption is minimum among all the peer transport vehicles 103-1 to 103-3 based on the received second information and the retrieved historical data. In a non-limiting example, the BTU consumption of the identified peer transport vehicle 103-2 may be 21000 BTU/HR, whereas the BTU consumption of the peer transport vehicles 103-1 and 103-3 may be 22000 BTU/HR and 23000 BTU/HR, respectively. Those skilled in the art will appreciate that the aforementioned example is merely exemplary and is not intended to limit the scope of the invention.

At step 407, the processor 201 further determines whether the energy consumption and the performance parameters of the transport vehicle 101 are greater than the energy consumption and the performance parameters of the identified peer transport vehicle 103-2. If a result of the determination at the step 407 is yes, then the flow of the method 400 proceeds to step 409.

At step 409, the processor 201 controls the setting of the cooling parameters of the transport vehicle 101 based on the cooling parameters of the identified peer transport vehicle 103-2. As a non-limiting example, the processor 201 may copy the cooling parameters of the identified peer transport vehicle 103-2 to the transport vehicle 101 or override the cooling parameters of the transport vehicle 101 based on the cooling parameters of the identified peer transport vehicle 103-2. In particular, the processor 201 may perform copy cooling in the transport vehicle 101 by copying the cooling parameters of the identified peer transport vehicle 103-2 to the transport vehicle 101 or by modifying the cooling parameters of the transport vehicle 101 based on the cooling parameters of the identified peer transport vehicle 103-2.

According to some embodiments, upon determining that the energy consumption and the performance parameters of the transport vehicle 101 are greater than the energy consumption and the performance parameters of the identified peer transport vehicle 103-2, the processor 201 may notify the user of the transport vehicle 101 by displaying an alert message on a dashboard panel of the transport vehicle 101. The processor 201 may also notify the user of the transport vehicle 101 by displaying the alert message on a Graphical User Interface (GUI) of a device associated with the user of the transport vehicle. The alert message may indicate an availability of better configuration settings of the cooling parameters of the transport vehicle 101. Thereafter, the processor 201 may further control the setting of the cooling parameters of the transport vehicle 101 based on a user response to the notified alert message.

According to some embodiments, upon determining that the energy consumption and the performance parameters of the transport vehicle 101 are greater than the energy consumption and the performance parameters of the identified peer transport vehicle 103-2, the processor 201 may notify, to a third party remotely managing the transport vehicle 101, an alert message indicating an availability of better configuration settings of the cooling parameters of the transport vehicle 101. Thereafter, the processor 201 may further control the setting of the cooling parameters of the transport vehicle 101 based on a response from the third party to the notified alert message.

If a result of the determination at the step 407 is no, then the flow of the method 400 proceeds to step 411.

At step 411, the processor 201 may continue or maintain the cooling parameters currently being set in the transport vehicle 101. The processor 201 may also update the database 207 with the currently set cooling parameters after completion of the transit trip of the transport vehicle 101 in which the energy consumption and the performance parameters of the transport vehicle 101 are less than the energy consumption and the performance parameters of the identified peer transport vehicle 103-2. In a non-limiting example, the processor 201 may skip the copying of the cooling parameters of the identified peer transport vehicle 103-2 to the transport vehicle 101 or skip the override of the cooling parameters of the transport vehicle 101 based on the cooling parameters of the identified peer transport vehicle 103-2. The processor 201 may further store the currently set cooling parameters of the transport vehicle 101 into the database 207. The processor 201 may also store information associated with the energy consumption and the performance parameters which are less than the energy consumption and the performance parameters of each of the plurality of peer transport vehicles 103-1 to 103-3.

According to some embodiments, the processor 201 may copy the cooling parameters of the identified peer transport vehicle 103-2 to the transport vehicle 101 based on a trip cost of a past transit trip of the identified peer transport vehicle 103-2 or override the cooling parameters of the transport vehicle 101 based on the trip cost of the past transit trip of the identified peer transport vehicle 103-2. As an example, for copying the cooling parameters of the identified peer transport vehicle 103-2 to the transport vehicle 101 based on the trip cost of the past transit trip of the identified peer transport vehicle 103-2, at first, the processor 201 may calculate a trip cost associated with the current transit trip of the transport vehicle 101 based at least on the BTU consumption and energy consumption of the transport vehicle 101. Secondly, the processor 201 may compare the calculated trip cost associated with the current transit trip of the transport vehicle 101 with a trip cost of the past transit trip of the identified peer transport vehicle 103-2. The travel route of the current transit of the transport vehicle 101 may be similar as that of a travel route of the past transit trip of the identified peer transport vehicle 103-2. Further, the terrain associated with the travel route of the current transit of the transport vehicle 101 may also be similar as that of a terrain associated with the travel route of the past transit trip of the identified peer transport vehicle 103-2. Thirdly, the processor 201 may determine whether the calculated trip cost associated with the current transit trip of the transport vehicle 101 is greater than the trip cost of the past transit trip of the identified peer transport vehicle 103-2. Finally, upon determining that the calculated trip cost associated with the current transit trip of the transport vehicle 101 is greater than the trip cost of the past transit trip of the identified peer transport vehicle 103-2, the processor 201 may copy the cooling parameters of the identified peer transport vehicle 103-2 to the transport vehicle 101.

According to some embodiments, the processor 201 may also determine, based on the calculated trip cost associated with the current transit trip of the transport vehicle 101, efficient parameters for setting the cooling parameters of the transport vehicle 101.

According to some embodiments, the processor 201 may compare the speed of the transport vehicle 101 during the current transit trip with a speed of the identified peer transport vehicle 103-2 during the past transit trip. The processor 201 may notify, based on a result of the comparison, the user of the transport vehicle 101 by displaying an alert message on the dashboard of the transport vehicle 101 or the GUI of the user device. The alert message may include a message for the user of the transport vehicle to maintain the speed of the transport vehicle 101 with respect to the speed of the identified peer transport vehicle 103-2 during the past transit trip.

According to some embodiments, based on the result of the comparison, the processor 201 may also control an adjustment of at least one of air intake operation, fresh air blower motor operation, or a blower speed of the transport vehicle 101. As an example, the processor 201 may adjust the at least one of the air intake operation, the fresh air blower motor operation, or the blower speed of the transport vehicle 101, when it is determined that the speed of the transport vehicle 101 during the current transit trip is greater than or less than the speed of the identified peer transport vehicle 103-2 during the past transit trip similar to that of the current transit trip. The processor 201 may also adjust the RPM of the transport vehicle 101 to lower speed of the transport vehicle 101. The adjustment of the RPM and the blower speed of the transport vehicle 101 would contribute to saving the energy of the transport vehicle 101.

According to some embodiments, the processor 201 may also determine whether the energy consumption and the performance parameters of the transport vehicle 101 are greater than a threshold level even after copying the cooling parameters of the identified peer transport vehicle 103-2 to the transport vehicle 101 or overriding the cooling parameters of the transport vehicle 101 based on the cooling parameters of the identified peer transport vehicle 103-2. Upon determining that the energy consumption and the performance parameters of the transport vehicle 101 are greater than the threshold level, the processor 201 may also send a notification alert to the external device associated with the maintenance team responsible for maintaining the transport vehicle 101. The sent alert notification may indicate a requirement for maintenance of the transport vehicle 101 or a requirement for replacement of one or more filters of the transport vehicle 101.

In view of the one or more embodiments as described above, the method 400 disclosed herein provides various technical effects and benefits including providing one or more notification alerts to the user of the transport vehicle 101 about the chances of maintaining effective temperature settings in the transport vehicle 101 and copying effective cooling parameters automatically from one of peer transport vehicle among the plurality of peer transport vehicles 103-1 to 103-3.

Further, the technical effects and benefits include calling out for maintenance if energy efficiency is not maintained in the transport vehicle 101 even after copying the cooling parameters and other performance parameters from the identified peer transport vehicle 103-2.

Furthermore, by setting energy-efficient cooling parameters and other vehicle parameters using the method disclosed herein, the energy consumption of the transport vehicle 101 may be reduced. Due to the reduction in the energy consumption of the transport vehicle 101, a Global Warming Potential (GWP) will be less, and hence the method 400 disclosed herein may be considered an eco-friendly solution for reducing energy consumption.

The method 400 disclosed herein may be more beneficial for the refrigerated transportation of homogeneous goods by the transport vehicle 101.

Aspects of the are described herein with reference to flowchart illustrations and/or block diagrams of methods, systems, and computer program products. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special-purpose computer, or other programmable data processing apparatus to produce a machine, such that the instructions, which execute via the processor of the computer or other programmable data processing apparatus, create means for implementing the operations/acts specified in the flowchart and/or block diagram block or blocks.

The flowchart and block diagrams in the FIGS. illustrate the architecture, operability, and operation of possible implementations of systems, methods, and computer program products. In this regard, each block in the flowchart or block diagrams may represent a module, segment, or portion of instructions, which comprises one or more executable instructions for implementing the specified logical operation(s). In some alternative implementations, the operations noted in the block may occur out of the order noted in the FIGS. For example, two blocks shown in succession may be executed substantially concurrently, or the blocks may sometimes be executed in the reverse order, depending upon the operability involved. It will also be noted that each block of the block diagrams and/or flowchart illustration, and combinations of blocks in the block diagrams and/or flowchart illustration, can be implemented by special purpose hardware-based systems that perform the specified operations or acts or carry out combinations of special purpose hardware and computer instructions.

The descriptions of the various embodiments of the present invention have been presented for purposes of illustration but are not intended to be exhaustive or limited to the embodiments disclosed herein. Many modifications and variations will be apparent to those of ordinary skill in the art without departing from the scope of the invention, which is defined by the claims. The terminology used herein was chosen to best explain the principles of the embodiments, the practical application or technical improvement over technologies found in the marketplace, or to enable others of ordinary skill in the art to understand the embodiments disclosed herein.

While the preferred embodiment had been described, it will be understood that those skilled in the art, both now and in the future, may make various improvements and enhancements which fall within the scope of the claims which follow.

Benefits, other advantages, and solutions to problems have been described above with regard to specific embodiments. However, the benefits, advantages, solutions to problems and any component(s) that may cause any benefit, advantage, or solution to occur or become more pronounced are not to be construed as a critical, required, or essential feature or component of any or all the claims.

## Claims

1. A method for setting cooling parameters for a refrigerated transport vehicle (101) by a server (105), the method comprising:
receiving first information and second information from the refrigerated transport vehicle, wherein:
the first information includes energy consumption and performance parameters associated with the transport vehicle, and
the second information includes vehicle type information and transit information associated with the refrigerated transport vehicle;
retrieving historical data associated with a plurality of peer refrigerated transport vehicles (103) similar to the refrigerated transport vehicle based on the second information;
identifying a peer refrigerated transport vehicle, of the plurality of peer refrigerated transport vehicles, for which energy consumption is minimum based on the received second information and the retrieved historical data;
determining whether the energy consumption and the performance parameters of the refrigerated transport vehicle are greater than the energy consumption and the performance parameters of the identified peer refrigerated transport vehicle; and
controlling, upon determining that the energy consumption and the performance parameters of the refrigerated transport vehicle are greater than the energy consumption and the performance parameters of the identified peer refrigerated transport vehicle, setting of the cooling parameters of the refrigerated transport vehicle based on cooling parameters of the identified peer refrigerated transport vehicle.

2. The method of claim 1, wherein the first information and second information are received via one of a Bluetooth, Wi-Fi, LoRa, or Zigbee.

3. The method of claim 1 or 2, wherein the energy and performance parameters include at least one of British Thermal Unit (BTU) consumption of the refrigerated transport vehicle, fuel consumption of the refrigerated transport vehicle, or speed of the refrigerated transport vehicle.

4. The method of claim 3, further comprising:
calculating a trip cost associated with a current trip of the refrigerated transport vehicle based at least on the BTU consumption and energy consumption of the refrigerated transport vehicle; and
determining, based on the calculated trip cost, efficient parameters for setting the cooling parameters of the refrigerated transport vehicle.
optionally wherein the method further comprises:
comparing the calculated trip cost with a trip cost of the identified peer refrigerated transport vehicle;
determining whether the calculated trip cost of the refrigerated transport vehicle is greater than the trip cost of the identified peer refrigerated transport vehicle; and
copying the cooling parameters of the identified peer refrigerated transport vehicle to the refrigerated transport vehicle upon determining that the calculated trip cost of the refrigerated transport vehicle is greater than the trip cost of the identified peer refrigerated transport vehicle.

5. The method of claim 3 or 4, further comprising:
comparing the speed of the refrigerated transport vehicle with a speed of the identified peer refrigerated transport vehicle; and
notifying, based on the comparison, the user of the refrigerated transport vehicle by displaying an alert message on the dashboard of the refrigerated transport vehicle, wherein the alert message includes a message for the user to maintain the speed of the refrigerated transport vehicle with respect to the speed of the identified peer refrigerated transport vehicle.
optionally wherein the method further comprises:
controlling, based on the comparison, at least one of air intake operation, fresh air blower motor operation, or a blower speed of the refrigerated transport vehicle.

6. The method of any preceding claim, wherein the transit information includes at least one of vehicle route information, a type of cargo carried by the refrigerated transport vehicle, or real time environmental conditions around the refrigerated transport vehicle.

7. The method of any preceding claim, wherein the cooling parameters of the refrigerated transport vehicle include at least one of temperature inside the refrigerated transport vehicle, humidity inside the refrigerated transport vehicle, fresh air ventilation inside the refrigerated transport vehicle, parameters associated with a drain outlet motor of the refrigerated transport vehicle, defrost rate, and dehumidification.

8. The method of any preceding claim, wherein the setting of the cooling parameters of the refrigerated transport vehicle includes one of copying the cooling parameters of the identified peer refrigerated transport vehicle to the refrigerated transport vehicle or overriding the cooling parameters of the refrigerated transport vehicle based on the cooling parameters of the identified peer refrigerated transport vehicle.

9. The method of claim 8, wherein, upon determining that the energy consumption and the performance parameters of the refrigerated transport vehicle are less than the energy and fuel consumption of the identified peer refrigerated transport vehicle, the method further comprises:
skipping one of the copying of the cooling parameters of the identified peer refrigerated transport vehicle to the refrigerated transport vehicle or the overriding of the cooling parameters of the refrigerated transport vehicle; and
storing the cooling parameters of the transport vehicle into a server database.

10. The method of claim 8 or 9, further comprising:
determining whether the energy consumption and the performance parameters of the refrigerated transport vehicle are greater than a threshold level after one of the copying of the cooling parameters of the identified peer refrigerated transport vehicle to the refrigerated transport vehicle or the overriding of the cooling parameters of the refrigerated transport vehicle; and
sending, upon determining that the energy consumption and the performance parameters of the refrigerated transport vehicle are greater than the threshold level, a notification alert to an external device associated with a maintenance team responsible for maintaining the refrigerated transport vehicle, wherein the notification alert indicates a requirement for maintenance of the refrigerated transport vehicle or a requirement of replacement of one or more filters.

11. The method of any preceding claim, further comprising:
notifying, upon determining that the energy consumption and the performance parameters of the refrigerated transport vehicle are greater than the energy consumption and the performance parameters of the identified peer refrigerated transport vehicle, a user of the refrigerated transport vehicle by displaying an alert message on a dashboard panel of the refrigerated transport vehicle, wherein the alert message indicates an availability of better configuration settings of the cooling parameters of the refrigerated transport vehicle; and
controlling the setting of the cooling parameters of the refrigerated transport vehicle based on a user response to the notified alert message.

12. The method of any preceding claim, further comprising:
notifying, to a third party remotely managing the refrigerated transport vehicle, an alert message indicating an availability of better configuration settings of the cooling parameters of the refrigerated transport vehicle; and
controlling the setting of the cooling parameters of the refrigerated transport vehicle based on a response from the third party to the notified alert message.

13. The method of any preceding claim, wherein the historical data associated with the plurality of peer refrigerated transport vehicles is retrieved using one of an artificial intelligence (Al) model or a machine learning (ML) model.

14. A system for setting cooling parameters for a refrigerated transport vehicle (101), comprising:
a server (105) including a memory (203) and a processor (201) communicatively coupled to the memory, wherein the processor is configured to:
receive first information and second information from the refrigerated transport vehicle, wherein
the first information includes energy consumption and performance parameters associated with the refrigerated transport vehicle, and
the second information includes vehicle type information and transit information associated with the refrigerated transport vehicle;
retrieve historical data associated with a plurality of peer refrigerated transport
vehicles (103) similar to the transport vehicle based on the second information;
identify a refrigerated peer transport vehicle, of the plurality of peer refrigerated transport vehicles, for which energy and fuel consumption is minimum based on the received second information and the retrieved historical data;
determine whether the energy consumption and the performance parameters of the refrigerated transport vehicle are greater than the energy consumption and the performance parameters of the identified peer refrigerated transport vehicle; and
control, upon determining that the energy consumption and the performance parameters of the refrigerated transport vehicle are greater than the energy consumption and the performance parameters of the identified peer refrigerated transport vehicle, setting of the cooling parameters of the refrigerated transport vehicle based on cooling parameters of the identified peer refrigerated transport vehicle.

15. A non-transitory computer readable medium including instructions stored thereon that when processed by at least one processor (201) cause a system to:
receive first information and second information from a refrigerated transport vehicle (101), wherein
the first information includes energy consumption and performance parameters associated with the refrigerated transport vehicle, and
the second information includes vehicle type information and transit information associated with the refrigerated transport vehicle;
retrieve historical data associated with a plurality of peer refrigerated transport vehicles (103) similar to the refrigerated transport vehicle based on the second information;
identify a peer refrigerated transport vehicle, of the plurality of peer refrigerated transport vehicles, for which energy and fuel consumption is minimum based on the received second information and the retrieved historical data;
determine whether the energy consumption and the performance parameters of the refrigerated transport vehicle are greater than the energy consumption and the performance parameters of the identified peer refrigerated transport vehicle; and
control, upon determining that the energy consumption and the performance parameters of the refrigerated transport vehicle are greater than the energy consumption and the performance parameters of the identified peer refrigerated transport vehicle, setting of the cooling parameters of the refrigerated transport vehicle based on cooling parameters of the identified peer refrigerated transport vehicle.
